# EUROPEAN PATENT APPLICATION

(11) **EP 4 275 528 A1**
(43) Date of publication of application: **15.11.2023**
(21) Application number: 23169777.2
(22) Date of filing: 25.04.2023
(51) Int. Cl.: A24F 40/465, A24F 40/51, H05B 6/02

(54) **HEATING COMPONENT OF AN ELECTRONIC ATOMIZATION DEVICE**

(30) Priority: 13.05.2022 CN 202210520239; 07.06.2022 CN 202210632540
(71) Applicant: Hainan Moore Brothers Technology Co., Ltd., Hainan 571900 (CN)
(72) Inventor: WEI, Naian, Chengmai (CN); LI, Pei, Chengmai (CN); JIANG, Zhenlong, Chengmai (CN)
(74) Representative: Michalski Hüttermann & Partner Patentanwälte mbB

(57) **Abstract**

This application relates to an electronic atomization device and a heating component thereof. The heating component is configured to be inserted into an aerosol generation substrate. The heating component includes: a housing provided with a cavity; a heating medium accommodated in the cavity and capable of generating heat in an alternating magnetic field; and a temperature control element accommodated in the cavity and configured to measure a temperature inside the cavity.

## Description

### TECHNICAL FIELD

This application relates to the field of atomization technologies, and in particular, to an electronic atomization device and a heating component thereof.

### BACKGROUND

Heat Not Burn (HNB) electronic atomization devices have the advantages of usage safety, convenience, health, environmental protection and the like, and are increasingly concerned and favored by people.

An existing HNB electronic atomization device generally includes a heating component and a power supply component. The heating component is configured to heat and atomize an aerosol generation substrate when energized. The power supply component is connected to the heating component and configured to supply power to the heating component. At present, the heating component generally heats the aerosol generation substrate by resistive heating to atomize the aerosol generation substrate to form an aerosol. Such a method has the problems of low energy conversion efficiency, low heat conduction efficiency, and poor heating uniformity, affecting the taste of the aerosol.

### SUMMARY

Based on this, it is necessary to provide an electronic atomization device and a heating component thereof to resolve the problem of low energy conversion efficiency of the existing heating components.

A heating component is provided, which is configured to be inserted into an aerosol generation substrate. The heating component includes:
a housing provided with a cavity;
a heating medium accommodated in the cavity and capable of generating heat in an alternating magnetic field; and
a temperature control element accommodated in the cavity and configured to measure a temperature inside the cavity.

According to the aforementioned heating component, the temperature control element and the heating medium are accommodated in the cavity of the housing, the heating medium generates heat by electromagnetic induction, the heat is further conducted to the housing, and the housing conducts the heat to atomize the aerosol generation substrate. Therefore, a high heat conversion rate and a high heating speed are achieved, and the structural design of the heating component is simple and reasonable.

In an embodiment, the temperature control element is at least one of a positive temperature coefficient (PTC) element, a negative temperature coefficient (NTC) element, or a thermocouple.

In an embodiment, the heating component further includes two leads electrically connected to the temperature control element, the temperature control element includes a threaded section and a straight line section connected to each other, the straight line section extends through a middle of the threaded section and is connected to one of the leads, and an end portion of the threaded section is connected to the other lead.

In an embodiment, the heating component further includes a flange structure, the flange structure is fixed to the housing, and the flange structure is provided with an avoidance hole allowing the leads to pass through.

In an embodiment, the flange structure is made of ceramic, and the flange structure is fixed to the housing by welding; or the flange structure is made of plastic, and the flange structure is adhered to the housing by an adhesive.

In an embodiment, the housing includes a first main body and a second main body provided with the cavity, the first main body is fixed to an end portion of the second main body, an outer diameter of the first main body is less than an outer diameter of the second main body, and the flange structure is fixed to an end of the second main body away from the first main body.

In an embodiment, the first main body is conical, and the second main body is in a shape of a hollow cylinder.

In an embodiment, the first main body is made of ceramic or metal, and the second main body is made of ceramic.

In an embodiment, the heating component further includes a flange structure, and the flange structure is fixed to an end of the second main body away from the first main body.

In an embodiment, the heating medium is in a form of granule or powder.

In an embodiment, the heating medium includes a ferromagnetic material.

An electronic atomization device is provided, including:
the heating component described above; and
a power supply component, electrically connected to the heating component and configured to supply power to the heating component.

The electronic atomization device achieves a high heat conversion rate and a high heating speed and has a simple and reasonable structural design.

### BRIEF DESCRIPTION OF THE DRAWINGS

FIG. 1 is a schematic assembled view of an aerosol generation substrate, an induction coil and a heating component according to an embodiment;
FIG. 2 is a schematic perspective view of a heating component according to an embodiment;
FIG. 3 is a bottom view of the heating component shown in FIG. 2; and
FIG. 4 is a cross-sectional view of FIG. 2 taken along line A-A.

### List of Reference Numerals:

10. aerosol generation substrate; 20. induction coil; 100. housing; 101. cavity; 110. first main body; 120. second main body; 200. temperature control element; 210. threaded section; 220. straight line section; 300. heating medium; 400. flange structure; 401. avoidance hole; 500. lead.

### DETAILED DESCRIPTION

To make the foregoing objects, features and advantages of this application more comprehensible, specific implementations of this application are described in detail below with reference to the accompanying drawings. In the following description, many specific details are described to give a full understanding of this application. However, this application may be implemented in many other manners different from those described herein. A person skilled in the art may make similar improvements without departing from the connotation of this application. Therefore, this application is not limited to the specific implementations disclosed below.

In the description of this application, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", "circumferential direction" and the like are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of this application.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In description of this application, "multiple" means at least two, such as two and three unless it is specifically defined otherwise.

In this application, unless otherwise explicitly specified or defined, the terms such as "initial", "connect", "connection", "fix" and the like should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art may understand the specific meanings of the foregoing terms in this application according to specific situations.

In this application, unless otherwise explicitly specified or defined, the first feature being located "above" or "below" the second feature may be the first feature being in a direct contact with the second feature, or the first feature being in an indirect contact with the second feature through an intermediary. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

It should be noted that, when an element is referred to as "being fixed to" or "being arranged on" another element, the element may be directly on the other element, or an intermediate element may be present. When a component is considered to be "connected to" another component, the component may be directly connected to the other component, or an intervening component may be present.

The terms "vertical", "horizontal", "upper", "lower", "left", "right", and similar expressions used in this specification are only for purposes of illustration but not indicate a unique implementation.

Heat Not Burn (HNB) electronic atomization devices have the advantages of usage safety, convenience, health, environmental protection and the like, and are increasingly concerned and favored by people.

An existing HNB electronic atomization device generally includes a heating component and a power supply component. The heating component is configured to heat and atomize an aerosol generation substrate when energized. The power supply component is connected to the heating component and configured to supply power to the heating component. At present, the heating component generally heats the aerosol generation substrate by resistive heating to atomize the aerosol generation substrate to form an aerosol. Such a method has the problems of low energy conversion efficiency, low heat conduction efficiency, and poor heating uniformity, affecting the taste of the aerosol.

Based on the above consideration, an electronic atomization device and a heating component thereof are provided, which achieve a high heat conversion rate and a high heating speed, and have a simple and reasonable structural design.

An embodiment of this application provides an electronic atomization device, including a power supply component and a heating component connected to the power supply component. The power supply component is electrically connected to the heating component and configured to supply power to the heating component. The heating component heats and atomizes an aerosol generation substrate by using the power supplied by the power supply component, to generate an aerosol for a user to inhale.

The aerosol generation substrate is preferably a solid matrix. The solid matrix includes one or more of powders, particles, shreds, strips, or thin sheets of one or more herbal substrates. Alternatively, the solid matrix further includes an additional volatile flavor compound to be released when the substrate is heated.

It should be noted that the electronic atomization device further includes an atomization cavity and a circuit board, the aerosol generation substrate is removably disposed in the atomization cavity, and the heating component at least partially extends into the atomization cavity. When the aerosol generation substrate is in the atomization cavity, the heating component is inserted into the aerosol generation substrate heating, to heat the aerosol generation substrate to release a plurality of volatile compounds. The power supply component is configured to supply power. The circuit board is configured to guide a current between the power supply component and the heating component.

Specifically, the electronic atomization device is an HNB electronic atomization device.

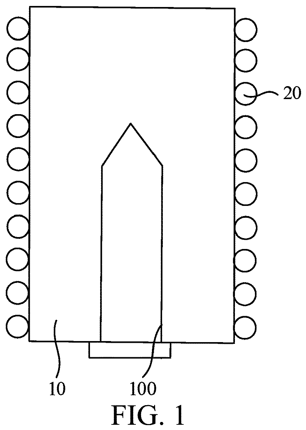

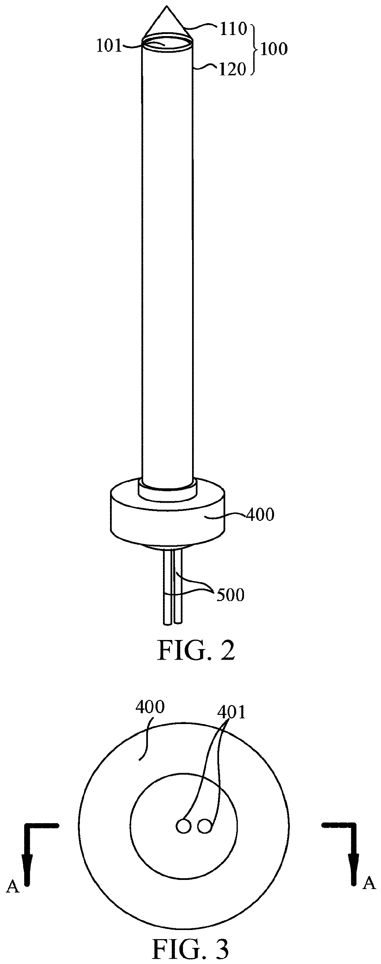

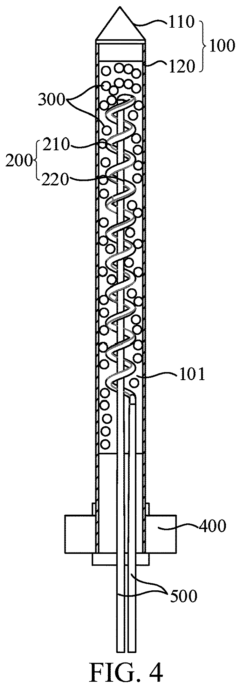

FIG. 1 is a schematic assembled view of an aerosol generation substrate, an induction coil and a heating component according to an embodiment. FIG. 2 is a schematic perspective view of a heating component according to an embodiment of this application. FIG. 3 is a bottom view of the heating component shown in FIG. 2. FIG. 4 is a cross-sectional view of the heating component shown in FIG. 2 taken along line A-A. For ease of description, the accompanying drawings only show structures related to this application.

Referring to FIG. 1 and FIG. 2, a heating component according to an embodiment of this application is configured to be inserted into and atomize an aerosol generation substrate. The heating component includes a housing 100, a temperature control element 200, and a heating medium 300. The housing 100 is provided with a cavity 101. The heating medium 300 is accommodated in the cavity 101 and is capable of generating heat in an alternating magnetic field. The temperature control element 200 is accommodated in the cavity 101 and is configured to measure a temperature inside the cavity 101.

According to the heating component, the temperature control element 200 and the heating medium 300 are accommodated in the cavity 101 of the housing 100, the heating medium 300 generates heat and further conducts the heat to the housing 100, and the housing 100 conducts the heat to atomize the aerosol generation substrate. The temperature measurement in the cavity 101 is implemented by the temperature control element 200, and there is no need to additionally provide a temperature measurement element. This can simplify the overall structure of the heating component, making the structural design simple and reasonable.

In this embodiment, the temperature control element 200 is at least one of a PTC element, an NTC element, or a thermocouple. It should be noted that, temperature coefficient of resistance (TCR) is the calculation of a relative change of resistance per degree of temperature change, is measured in ppm/°C, and includes a negative temperature coefficient (NTC) and a positive temperature coefficient (PTC). PTC generally refers to a material or component with a large positive temperature coefficient. Typically, PTC refers to a positive temperature coefficient thermistor. NTC generally refers to a negative temperature coefficient, and generally refers to a thermistor or material with a negative temperature coefficient. In the PTC or NTC solution, the temperature of the heating component may be determined by detecting the resistance of the temperature control element 200. In addition, the temperature control element 200 implemented using a PTC or NTC may also generate heat when energized, to provide auxiliary heating, thereby improving the heating speed and heating efficiency of the heating component.

More specifically, a periphery of a metal wire of the PTC is further wrapped with a first insulating layer, to provide an insulation effect for the temperature control element 200. The first insulating layer is an insulating coating or material, for example, a metal oxide particle coating. The composition of the metal oxide particle coating specifically includes metal oxide particles, polyvinylidene fluoride and N-methyl pyrrolidone. The material of the metal oxide particles may be selected from aluminum oxide, titanium dioxide, zinc oxide, magnesium oxide, and combinations thereof.

Referring to FIG. 3 and FIG. 4, the heating component further includes two leads 500 electrically connected to the temperature control element 200. The temperature control element 200 includes a threaded section 210 and a straight line section 220 connected to each other. The straight line section 220 extends through a middle of the threaded section 210 and is connected to one lead 500. An end portion of the threaded section 210 is connected to the other lead 500. In this way, the temperature control element 200 is electrically connected to the circuit board through the two leads 500.

Specifically, the leads 500 are pure silver wires or nickel wires, one lead 500 is respectively connected to the straight line section 220 and the circuit board by welding, and the other lead 500 is respectively connected to the threaded section 210 and the circuit board by welding. It can be understood that the circuit board may control the heating power according to the temperature, so as to realize the temperature control of the heating component.

In this embodiment, the threaded section 210 and the straight line section 220 are integrally formed, thus providing good integrity and facilitating quick assembly and disassembly.

In case the thermocouple is used, the threaded section 210 and the straight line section 220 are made of different metal materials and connected together by welding. It can be understood that, in some other embodiments, the temperature control element 200 may also have only one of the straight line segment 220 or the threaded section 210.

In this embodiment, the threaded section 210 of the temperature control element 200 spirals upward, and the length of the threaded section 210 is equal to the length of the cavity 101, so that heat can be transferred more quickly and uniformly. In some other embodiments, the length of the threaded section 210 of the temperature control element 200 may also be less than or greater than the length of the second main body 120, and the threaded section 210 may be replaced with a planar spiral coil.

In this embodiment, the threaded section 210 and the straight line section 220 are both disposed in the middle of the cavity 101, so as to facilitate the uniform distribution of heat generated. In some other embodiments, the threaded section 210 and the straight line section 220 may also be closely attached to an inner wall of the cavity 101 to further improve the heat transferring rate.

Referring to FIG. 4, the heating component further includes a flange structure 400. The flange structure 400 is fixed to the housing 100, and the flange structure 400 is provided with an avoidance hole 401 allowing the leads 500 to pass through. The heating component is connected to an atomization main body through the flange structure 400, and the electrical connection between the temperature control element 200 and the circuit board will not be affected.

It should be noted that the number of the leads 500 in this embodiment is two, and correspondingly, the number of the avoidance holes 401 is also two, i.e., each avoidance hole 401 corresponds to one lead 500.

Specifically, in an embodiment, the flange structure 400 is made of ceramic, and the flange structure 400 is fixed to the housing 100 by welding.

Specifically, in another embodiment, the flange structure 400 is made of plastic, and the flange structure 400 is fixed to the housing 100 by adhesion using an adhesive.

Referring to FIG. 4, the housing 100 includes a first main body 110 and a second main body 120. The first main body 110 is fixed to an end portion of the second main body 120. The outer diameter of the first main body 110 is less than the outer diameter of the second main body 120. The cavity 101 is provided in the second main body 120. The flange structure 400 is fixed to an end of the second main body 120 away from the first main body 110. In this way, the components can be smoothly accommodated in the cavity 101 of the housing 100.

Specifically, the first main body 110 is conical, and the second main body 120 is in the shape of a hollow cylinder. In this way, the conical first main body 110 is subjected to a smaller resistance when inserted into the aerosol generation substrate, and the user can easily insert the housing 100 into a gap of the aerosol generation substrate with a small force, so that the deformation of the aerosol generation substrate can be effectively avoided, the heating component can be protected, and the service life of the heating component can be prolonged.

It should be noted that the second main body 120 may be in any shape such as cylindrical or prism-shaped, as long as the cavity 101 is provided in the second main body 120.

The first main body 110 may be of a hollow structure or a solid structure. When the first main body 110 is of a hollow structure, the volume of the cavity 101 can be further increased. When the first main body 110 is of a solid structure, the mechanical strength of the first main body 110 can be enhanced.

More specifically, the first main body 110 is made of ceramic or metal, and the second main body 120 is ceramic. Because the first main body 110 needs to be inserted into the aerosol generation substrate to heat and atomize the aerosol generation substrate, the first main body 110 should have both high mechanical strength and high thermal conductivity, and the second main body 120 need to provide rapid heat transferring. Through the above arrangement, the requirements of high strength of the first main body 110 and high heat transfer rate of the second main body 120 can be met. When the second main body 120 is made of ceramic, the ceramic material does not absorb or reflect the alternating magnetic field, and therefore does not affect the heating efficiency of the heating component.

In this embodiment, the first main body 110 and the second main body 120 are separate structured, and the first main body 110 and the second main body 120 are connected together by welding. In some other embodiments, the first main body 110 and the second main body 120 may also be integrally formed, thereby achieving higher mechanical strength and better integrity.

In this embodiment, a functional glaze layer is further covered on a periphery of the second main body 120. This can not only prevent a short circuit between the temperature control element 200 and the second main body 120 and provides an insulation effect, but also can effectively protect the surface of the ceramic from being damaged by infrared radiation or acid/alkali corrosion.

Optionally, the functional glaze layer is made of one or more of lime glaze, feldspar glaze, lead glaze, lead-free glaze, boron glaze or lead-boron glaze. Alternatively, the functional glaze layer may be replaced with an insulating coating or material, for example, a metal oxide particle coating. The composition of the metal oxide particle coating specifically includes metal oxide particles, polyvinylidene fluoride and N-methyl pyrrolidone. The material of the metal oxide particles may be selected from aluminum oxide, titanium dioxide, zinc oxide, magnesium oxide, and combinations thereof.

Referring to FIG. 4, the heating medium 300 is in a form of granule or powder. In this way, the heating medium 300 can be conveniently and quickly accommodated in the cavity 101, thereby improving the assembly efficiency of the heating component.

The difference between the granular heating medium 300 and the powder heating medium 300 lies only in the particle size of the heating medium 300. When the heating medium 300 has a large particle size, for example, is in the form of spherical particles, blocky particles or solid particles in other shapes that are visible to naked eyes, the heating medium 300 is deemed as granular. When the heating medium 300 has a small particle size, for example, is in the form of a solid powder visible to naked eyes, the heating medium 300 is deemed as powder.

Specifically, the heating medium 300 is made of material with a high magnetic permeability and conductivity. The heating medium 300 includes a ferromagnetic material. A metallic ferromagnetic material has a high magnetic permeability and conductivity. For example, the heating medium 300 may be a metal or alloy material containing at least one element such as iron, cobalt, or nickel. Alternatively, the heating medium 300 may be any one or more of magnetic materials such as pure iron powder, carbonyl iron, magnetite or orthoferrate, or may be an alloy material such as an iron-nickel alloy and an iron-aluminum alloy. The foregoing materials have a high magnetic permeability and conductivity, which is conducive to rapid heating and heat conduction.

It should be noted that, referring to FIG. 1, the electronic atomization device further includes an induction coil. The induction coil can generate an alternating magnetic field when energized. The heating medium 300 generates an eddy current under the alternating magnetic field to generate heat, and the housing 100 conducts the heat to atomize the aerosol generation substrate.

According to some embodiments of this application, referring to FIG. 4, this application provides a heating component. The heating component includes a housing 100, a temperature control element 200, a heating medium 300, a flange structure 400, and two leads 500. The heating medium 300 is accommodated in a cavity 101 and is capable of generating heat in the alternating magnetic field. The temperature control element 200 is accommodated in the cavity 101 and is configured for temperature measurement and temperature control. The heating medium 300 is accommodated in the cavity 101 and is ferromagnetic, and the heating medium 300 is in the form of granule or powder. The temperature control element 200 includes a threaded section 210 and a straight line section 220 connected to each other. The straight line section 220 extends through the middle of the threaded section 210 and is connected to one leads 500. An end portion of the threaded section 210 is connected to the other lead 500.

The housing 100 includes a first main body 110 which is conical and a second main body 120 which is in the shape of a hollow cylinder. The first main body 110 is fixed to an end portion of the second main body 120. The cavity 101 is provided in the second main body 120. The first main body 110 is made of ceramic or metal. The second main body 120 is made of ceramic. A functional glaze layer is further covered on a periphery of the second main body 120. The flange structure 400 is fixed to an end of the second main body 120 away from the first main body 110, and the leads 500 are electrically connected to the temperature control element 200, extends through the avoidance hole 401 of the flange structure 400 and then exposed.

According to some embodiments of this application, referring to FIG. 4, this application provides an electronic atomization device, including a power supply component and the heating component connected to the power supply component. The power supply component is electrically connected to the heating component and configured to supply power to the heating component. The heating component heats and atomizes the aerosol generation substrate by using the power supplied by the power supply component, to generate an aerosol.

## Claims

1. A heating component configured to be inserted into an aerosol generation substrate, the heating component comprising:
a housing (100) provided with a cavity (101);
a heating medium (300) accommodated in the cavity (101) and capable of generating heat in an alternating magnetic field; and
a temperature control element (200) accommodated in the cavity (101) and configured to measure a temperature inside the cavity (101).

2. The heating component of claim 1, wherein the temperature control element (200) is at least one of a positive temperature coefficient (PTC) element, a negative temperature coefficient (NTC) element, or a thermocouple.

3. The heating component of claim 1, further comprising:
two leads (500) electrically connected to the temperature control element (200);
wherein the temperature control element (200) comprises a threaded section (210) and a straight line section (220) connected to each other, the straight line section (220) extends through a middle of the threaded section (210) and is connected to one lead (500), and an end portion of the threaded section (210) is connected to the other lead (500).

4. The heating component of claim 3, further comprising a flange structure (400) fixed to the housing (100), wherein the flange structure (400) is provided with an avoidance hole (401) allowing the leads (500) to pass through.

5. The heating component of claim 4, wherein the flange structure (400) is made of ceramic, and the flange structure is fixed to the housing (100) by welding.

6. The heating component of claim 4, wherein the flange structure (400) is made of plastic, and the flange structure is adhered to the housing (100) by an adhesive.

7. The heating component of claim 4, wherein the housing (100) comprises a first main body (110) and a second main body (120) provided with the cavity (101), the first main body (110) is fixed to an end portion of the second main body (120), an outer diameter of the first main body (110) is less than an outer diameter of the second main body (120), and the flange structure (400) is fixed to an end of the second main body (120) away from the first main body (110).

8. The heating component of claim 7, wherein the first main body (110) is conical, and the second main body (120) is in a shape of a hollow cylinder.

9. The heating component of claim 8, wherein the first main body (110) is made of ceramic or metal, and the second main body (120) is made of ceramic.

10. The heating component of claim 1, wherein the heating medium (300) is in a form of granule or powder.

11. The heating component of claim 1, wherein the heating medium (300) comprises a ferromagnetic material.

12. An electronic atomization device, comprising:
the heating component of any one of claims 1 to 11; and
a power supply component electrically connected to the heating component and configured to supply power to the heating component.
